# FASCICULE DE BREVET EUROPEEN

(11) **EP 4 344 994 B1**
(45) Date de publication et mention de la délivrance du brevet: **23.04.2025**
(21) Numéro de dépôt: 23195782.0
(22) Date de dépôt: 06.09.2023
(51) Int. Cl.: B64C 1/06, B64C 1/12, B64F 5/10

(54) **PROCÉDÉ D'ASSEMBLAGE D'UNE PORTION DE FUSELAGE PAR SOUDAGE À FLEXIBILITÉ AMELIORÉE, PORTION DE FUSELAGE ET AERONEF AINSI OBTENUS**
VERFAHREN ZUM VERBINDEN EINES RUMPFTEILS DURCH SCHWEISSEN MIT VERBESSERTER FLEXIBILITÄT, RUMPFTEIL UND SO ERHALTENES LUFTFAHRZEUG
METHOD FOR ASSEMBLING A FUSELAGE PORTION BY WELDING WITH IMPROVED FLEXIBILITY, FUSELAGE PORTION AND AIRCRAFT OBTAINED THEREBY

(30) Priorité: 29.09.2022 FR 2209932
(43) Date de publication de la demande: 03.04.2024
(73) Titulaire: AIRBUS OPERATIONS (S.A.S.), 31060 Toulouse (FR)
(72) Inventeur: DENTESANO, Johan, 31060 TOULOUSE (FR); DE KERGOMMEAUX, Matthieu, 31060 TOULOUSE (FR); AGUERA, Damien, 31060 TOULOUSE (FR)
(74) Mandataire: Airbus-OPS SAS

(56) Documents cités:
- DE-A1- 102008 041 172
- US-A1- 2009 283 509
- US-A1- 2010 044 514

## Description

La présente invention se rapporte au domaine de l'assemblage de fuselage d'aéronef. En particulier, elle concerne l'assemblage de panneaux de fuselage pour former des portions de fuselage et en particulier des tronçons de fuselage ainsi que l'assemblage entre ces tronçons formés. La présente invention concerne également la portion de fuselage, le tronçon de fuselage et l'aéronef ainsi obtenus.

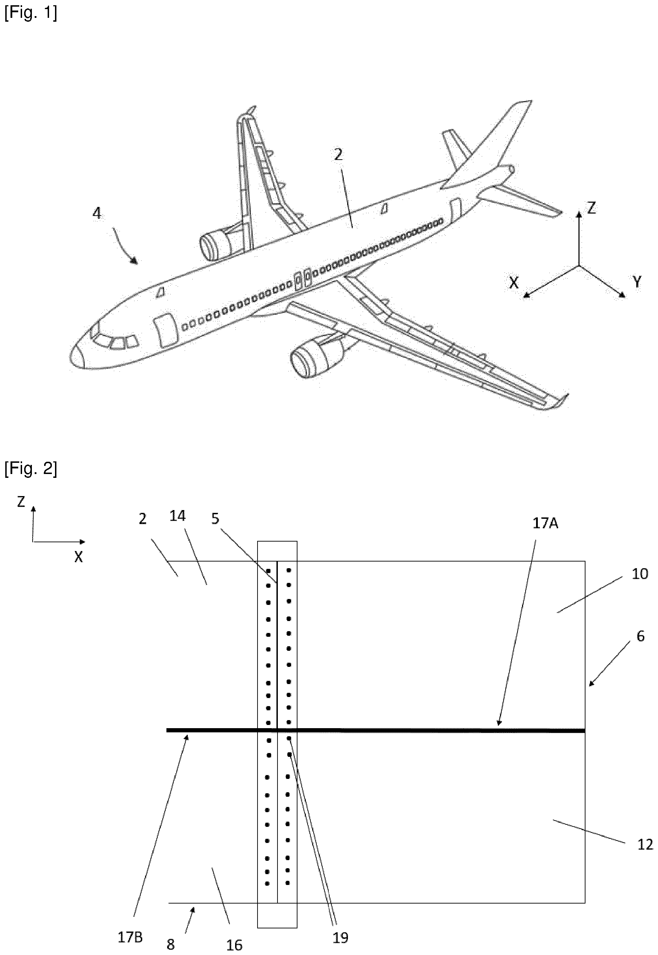

Comme montré sur les figures 1 et 2, le fuselage 2 d'un aéronef 4 comprend plusieurs tronçons 6, 8 de fuselage aboutés les uns contre les autres et assemblés entre eux selon des lignes de jonctions 5 circonférentielles définissant des plans perpendiculaires à l'axe longitudinal de l'avion. Chaque tronçon 6, 8 est lui-même obtenu par l'assemblage de panneaux 10, 12, 14, 16 de fuselage suivant des lignes 17A et 17B de jonctions longitudinales.

Comme illustré sur la figure 2, le procédé d'assemblage d'un fuselage 2 d'aéronef comprend une étape de jonction longitudinale et la technique d'assemblage par soudage est étudiée pour la réaliser. Ainsi au moins deux panneaux 10, 12 sont positionnés de manière contiguë et assemblés par soudage bord à bord suivant une ligne de jonction 17A des panneaux 10 et 12 pour former un tronçon 6 (dont seuls les deux panneaux 10, 12 sont représentés sur la figure 2). Le terme longitudinal se réfère à la direction X longitudinale de l'aéronef 4. Le tronçon 6 ainsi formé est positionné de manière contiguë avec un autre tronçon 8 et les tronçons 6 et 8 sont assemblés entre eux d'une manière plus classique à savoir à l'aide de fixations 19 par exemple de type rivet. Le soudage d'une extrémité à l'autre longitudinalement entre deux panneaux prive le fuselage de toute flexibilité. Or à l'assemblage, une flexibilité de la jonction est nécessaire pour ajuster les tronçons entre eux. Le soudage longitudinal entre deux panneaux positionnés de manière contiguë est décrit dans le brevet US2009/283509. Dans le brevet US2010/044514, est décrit l'assemblage de deux coques au niveau de la couture transversale présentant des raidisseurs de forme différente. Le document DE102008041172 présente l'assemblage de deux composants au niveau d'une couture transversale faisant varier l'épaisseur des composants assemblés au niveau de la couture.

La présente invention vise à proposer un procédé d'assemblage par soudage permettant d'en améliorer la flexibilité.

A cet effet, la présente invention concerne un procédé d'assemblage de panneaux de fuselage d'aéronef, des panneaux étant aboutés selon des lignes de jonction longitudinales et fixés l'un à l'autre par leurs bords longitudinaux par soudage, caractérisé en ce que les extrémités longitudinales de leurs bords soudés ne sont pas liées entre elles et en ce que des viroles longitudinales sont fixées de manière à recouvrir partiellement la surface concave des panneaux au moins partiellement au niveau desdites extrémités.

De cette manière, le procédé d'assemblage assure une certaine flexibilité au fuselage une fois les panneaux fixés les uns aux autres.

L'invention prévoit au moins l'une des caractéristiques optionnelles suivantes, prises isolément ou en combinaison.

Les panneaux sont soudés l'un à l'autre sur toute leur longueur L et les extrémités longitudinales des bords soudés sont dessoudées.

L'opération de soudage n'est réalisée que sur la partie des bords devant être liés et pas au niveau des extrémités.

Les viroles longitudinales recouvrent au moins partiellement les extrémités non soudées des bords et une partie des bords soudés sur une longueur permettant de mettre en place au moins une fixation pour fixer les viroles aux panneaux.

La longueur des extrémités non soudées est inférieure à la distance inter-cadre.

Les panneaux une fois assemblés forment un tronçon, et les tronçons sont assemblés deux à deux à l'aide d'une virole circonférentielle qui enjambe les viroles longitudinales.

Les panneaux une fois assemblés forment un tronçon, et les tronçons sont assemblés deux à deux à l'aide d'une virole circonférentielle qui jouxte les viroles longitudinales auxquelles elles sont liées par l'intermédiaire d'une éclisse.

La présente invention concerne également une portion de fuselage comprenant au moins deux panneaux liés selon des lignes de jonction longitudinale par leurs bords longitudinaux soudés entre eux, caractérisé en ce que les extrémités longitudinales de leurs bords soudés ne sont pas liées entre elles, des viroles longitudinales étant fixées de manière à recouvrir partiellement la surface concave des panneaux au moins partiellement au niveau desdites extrémités.

L'invention prévoit la caractéristique optionnelle suivante, prise isolément ou en combinaison.

Les viroles longitudinales recouvrent au moins partiellement les extrémités non soudées des bords et une partie des bords soudés sur une longueur permettant de mettre en place au moins une fixation pour fixer les viroles aux panneaux.

La présente invention concerne également un aéronef comprenant des portions de fuselage présentant au moins l'une des caractéristiques optionnelles présentées ci-dessus, prises isolément ou en combinaison, caractérisé en ce que chaque portion de fuselage forme un tronçon et en ce que les tronçons sont assemblés deux à deux à l'aide d'une virole circonférentielle.

D'autres buts, caractéristiques et avantages ressortiront de la description de l'invention qui va suivre, description donnée à titre d'exemple uniquement non limitatif, en référence aux dessins ci-annexés dans lesquels :
[Fig. 1] est une vue en perspective d'un aéronef selon la présente invention ;
[Fig. 2] est une vue schématique de l'assemblage de panneaux de fuselage utilisant notamment la technique de soudage ;
[Fig. 3] est une vue schématique de deux panneaux de fuselage assemblés selon une ligne de jonction longitudinale par soudage, les extrémités longitudinales des bords des panneaux soudés n'étant pas liées selon la présente invention, les cadres de raidissement desdits panneaux étant représentés pour matérialiser la distance inter-cadre au niveau des panneaux du tronçon illustré ;
[Fig. 4] est la même vue que la figure 3 dans laquelle les extrémités non liées ont été recouvertes par une virole longitudinale ;
[Fig. 5] est la même vue que la figure 4 dans laquelle deux panneaux d'un même tronçon sont positionnés de manière contiguë avec les deux panneaux du tronçon représentés sur la figure 4 formant une ligne de jonction circonférentielle recouverte par une virole circonférentielle ;
[Fig. 6] est la même vue que la figure 5 dans laquelle des fixations sont mises en place sur la virole circonférentielle en particulier au niveau de la virole longitudinale ;
[Fig. 7] est la même vue que la figure 5 mais représentant une variante dans laquelle les viroles sont jointes par l'intermédiaire d'une éclisse.
[Fig. 8] est la même vue que la figure 7 mais avec une autre forme d'éclisse.

La description qui suit se réfère à un repère orthonormé X, Y, Z (visible sur la figure 1) dans lequel les directions horizontales X, Y et verticale Z sont définies en référence à un aéronef posé sur un sol horizontal. Les trois directions X, Y, Z sont orthogonales entre elles. Le fuselage de l'aéronef s'étend le long d'une direction longitudinale X, direction parallèle à l'axe de roulis. La direction Y correspond à la direction orientée transversalement et horizontalement par rapport à la direction longitudinale X, direction parallèle à l'axe de tangage. La direction Z correspond à la direction verticale ou hauteur parallèle à l'axe de lacet. Qualifier de longitudinal respectivement transversal, vertical signifie parallèle à la direction longitudinale, respectivement transversale, verticale. Concernant les panneaux de fuselage, dans les formes de réalisation illustrées, les panneaux sont rectangulaires : le terme longitudinal qualifie donc ici aussi la direction des bords les plus longs du panneau, ceux destinés à venir dans la direction longitudinale de l'aéronef. Cependant, il est possible d'avoir des formes de réalisation dans lesquelles les bords les plus courts des panneaux rectangulaires se trouvent dans la direction longitudinale ou encore des panneaux non rectangulaires et présentant au moins un bord au moins partiellement rectiligne qui s'étend dans la direction longitudinale. Le bord du panneau au moins partiellement rectiligne se trouvant dans la direction longitudinale est le bord destiné à être joint avec un bord d'un panneau adjacent au niveau circonférentiel. La surface extérieure du fuselage est orientée vers l'air extérieur de l'aéronef par opposition à la surface intérieure du fuselage orientée vers l'intérieur du fuselage à savoir vers le cockpit, la cabine ou autre. Les panneaux étant courbes, la surface intérieure correspond également à la surface concave du panneau et la surface extérieure à la surface convexe de celui-ci.

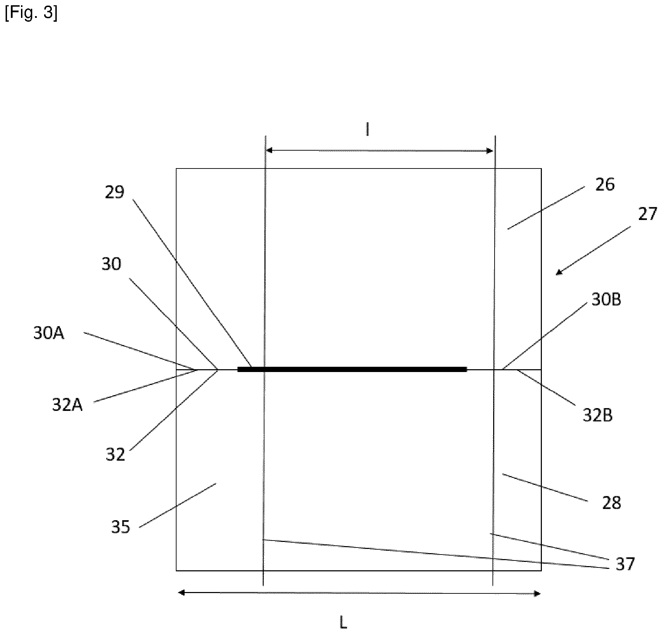

Comme le montre la figure 3, le procédé d'assemblage selon la présente invention comprend une première étape consistant à assembler entre eux par soudage deux panneaux 26, 28 en vis-à-vis accolés longitudinalement sans se recouvrir l'un l'autre de manière à assurer la jonction et la continuité du transfert des flux le long des panneaux. Les panneaux 26, 28 ainsi assemblés forment une portion 27 de panneaux. Une portion 27 de fuselage correspond à l'assemblage d'au moins deux panneaux 26, 28. Les panneaux sont joints le long d'une ligne 29 appelée ligne de jonction longitudinale. Les panneaux 26, 28 assemblés forment un tout continu sans décrochement de surfaces. N'est décrit que l'assemblage de deux panneaux car l'assemblage selon des lignes de jonction longitudinale est le même pour l'ensemble des panneaux formant un même tronçon. Les panneaux 26, 28 sont positionnés de manière contiguë de manière à souder leurs bords 30, 32 longitudinaux accolés sans que les extrémités longitudinales 30A, 30B, 32A, 32B de ces bords ne soient liées entre elles. Les panneaux 26, 28 sont représentés de manière simplifiée. Ils sont courbes de manière qu'une fois plusieurs panneaux assemblés comme expliqué ci-dessus, ils forment entre eux un tronçon dont la forme peut être variée : ce peut être une forme cylindrique ou plus complexe par exemple à plusieurs lobes ou encore une forme dont la section est à contour évolutif dans la direction longitudinale comme celle de la pointe avant ou de la queue d'un aéronef ou autre.

Selon un premier mode de réalisation, les panneaux sont assemblés longitudinalement par soudage sur toute leur longueur L. On entend par longueur L la dimension la plus importante du panneau s'étendant parallèlement à la direction X s'agissant des panneaux de forme rectangulaire illustrés. Selon une étape supplémentaire, les extrémités longitudinales 30A, 30B, 32A, 32B des bords 30, 32 des panneaux sont dessoudées par tout type de moyen et par exemple par découpe. Selon un deuxième mode de réalisation, le soudage n'est pas réalisé longitudinalement sur la totalité de longueur L du panneau : les extrémités longitudinales 30A, 30B, 32A, 32B des bords 30, 32 des panneaux ne sont pas assemblées entre elles. Selon une forme de réalisation des deux modes présentés, la longueur de chaque extrémité non soudée 30A, 30B, 32A, 32B est déterminée par le besoin de souplesse du tronçon lors de l'assemblage. Selon une forme possible, la longueur de chaque extrémité non soudée ne dépasse pas la distance I inter-cadre illustrée sur la figure 3. Pour rappel, un tronçon de fuselage comprend une peau 35 par exemple en matériau composite raidie par des raidisseurs 37 circonférentiels désignés sous le nom de cadre. La distance I inter-cadre correspond à la distance entre deux cadres se trouvant au niveau du panneau concerné ou s'il n'y a qu'un cadre au niveau dudit panneau, la distance entre le cadre se trouvant au niveau du panneau et le cadre le plus proche se trouvant au niveau d'un panneau adjacent dans la direction longitudinale.

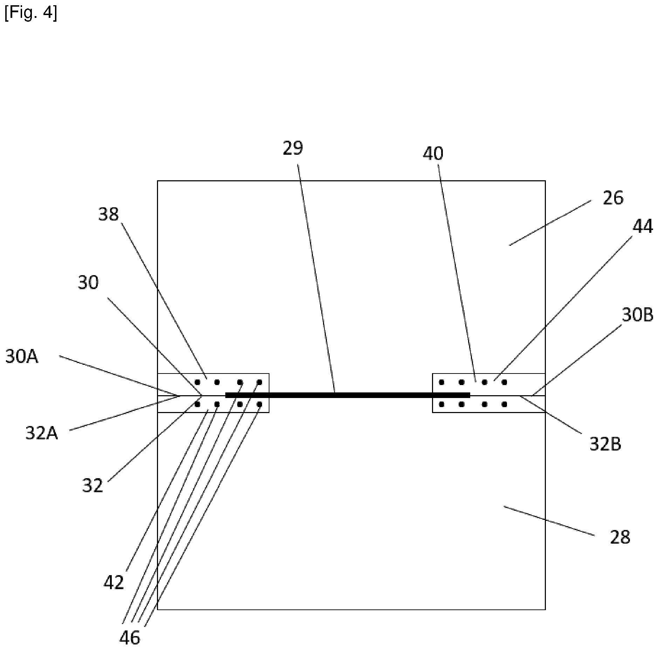

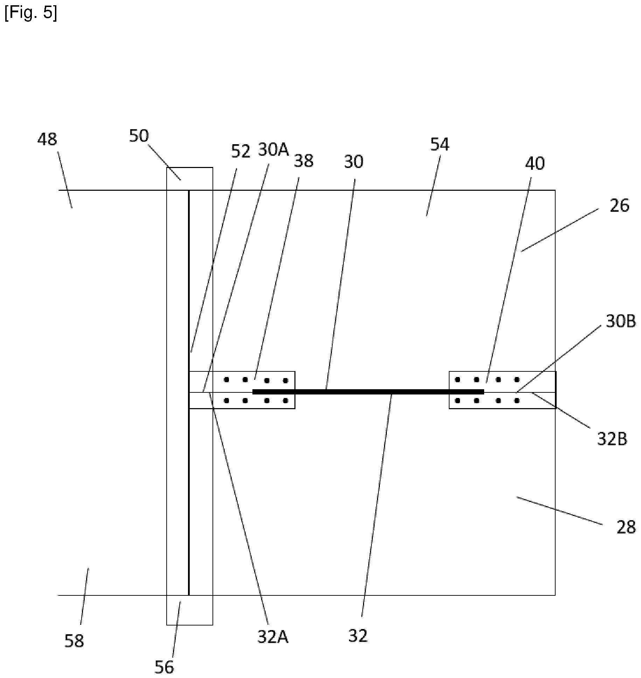

La deuxième étape du procédé d'assemblage représentée sur la figure 4 consiste à poser une virole 38, 40 longitudinale à savoir une plaque 42, 44 sur la surface intérieure (surface concave) du fuselage de telle sorte qu'elle recouvre partiellement chacun desdits deux panneaux 26, 28 au niveau des extrémités 30A, 30B, 32A, 32B non liées entre elles et légèrement au-delà. La pose de la virole 38, 40 est effectuée après la mise en position du tronçon 48 adjacent (figure 5) du côté de la virole 38 concernée mais pourrait être réalisée avant. La plaque 42, 44 est réalisée par exemple dans un alliage à base d'aluminium mais tout autre matériau est possible. Sa longueur est telle que la virole 38, 40 recouvre les bords 30, 32 des panneaux 26, 28 sur toute la longueur des extrémités 30A, 30B, 32A, 32B non liées et se prolonge au-delà pour permettre la mise en place d'au moins une fixation 46 de la plaque 42, 44 avec les panneaux 26, 28 dans la direction X au niveau des bords 30, 32 soudés ; dans la forme de réalisation illustrée, deux fixations 46 sont prévues de part et d'autre de la ligne de jonction longitudinale, à savoir 4 fixations 46 pour la plaque 42 au niveau uniquement des bords soudés. Les fixations 46 peuvent être agencées en au moins un rang. Les fixations 46 sont de type connu et par exemple de type rivet. La largeur de la virole est telle qu'elle permette la mise en place de fixations 46 dans la direction Y. L'épaisseur de la virole résulte de calculs en dimensionnement qui prennent en compte le matériau utilisé. Des fixations 46 sont prévues pour fixer la virole 38, 40 aux panneaux 26, 28 au niveau des bords soudés comme vu plus haut mais aussi au niveau d'une partie des extrémités 30A, 30B, 32A, 32B des bords non soudés. Au moins un rang de fixation 46 est prévu pour fixer la plaque 42, 44 au panneau 26 et au moins un rang de fixation en vis-à-vis de celle-ci par rapport à la ligne 29 de jonction longitudinale pour fixer la plaque 42, 44 au panneau 28. Selon la forme illustrée, les rangs de fixation 46 sont parallèles entre eux et les fixations 46 sont positionnées à équidistance mais tout autre positionnement est possible. Aucune fixation n'est prévue sur la zone la plus extrémale longitudinalement de la virole 38, 40 et la plus proche du tronçon adjacent 48. La zone dépourvue de fixation est destinée comme il sera vu plus loin à être recouverte par une virole 50 circonférentielle placée au niveau de la ligne 52 de jonction circonférentielle.

La troisième étape du procédé d'assemblage représenté sur la figure 5 comprend l'assemblage du tronçon 54 formé comme décrit précédemment avec un tronçon adjacent ici le tronçon 48. Les tronçons 48, 54 sont positionnés en vis-à-vis aboutés de manière à être en prolongement l'un de l'autre. La virole 50 à savoir une plaque 56 est placée sur la surface intérieure (surface concave) du fuselage au niveau de la ligne 52 de jonction circonférentielle de telle sorte qu'elle recouvre partiellement chacun desdits deux panneaux 26, 28 et les panneaux 58 du tronçon 48 adjacent. Les panneaux 58 du tronçon 48 n'ont pas été distingués par souci de simplification. La virole 50 circonférentielle enjambe la virole longitudinale 38 en se superposant à elle.

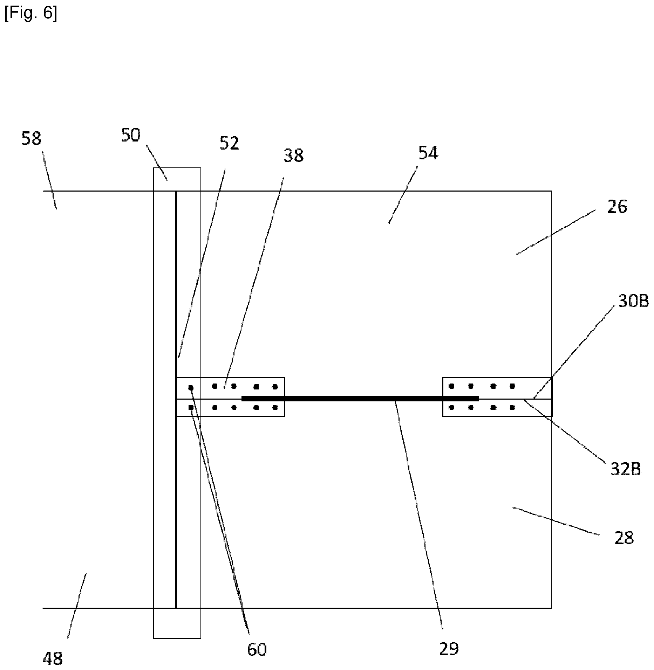

Comme représenté sur la figure 6, la virole 50 est assemblée aux panneaux 26, 28, 58 à l'aide de fixations 60 de type connu telles que des rivets. Des fixations 60 sont prévues au niveau de la superposition des viroles 38, 50.

La présente invention concerne également les portions 27 (figure 3) de fuselage ainsi formées, le tronçon 48, 54 de fuselage ainsi que l'aéronef 2 provenant de l'assemblage de tels tronçons.

Comme représenté sur la figure 3, une portion 27 de fuselage comporte au moins deux panneaux 26, 28 assemblés entre eux par leurs bords 30, 32 longitudinaux joints par soudage sans que leurs extrémités longitudinales 30A, 30B, 32A, 32B ne soient liées entre elles. Les panneaux 26, 28 sont positionnés en vis-à-vis accolés longitudinalement sans se recouvrir l'un l'autre de manière à assurer la jonction et la continuité du transfert des flux le long des panneaux. Le tronçon de fuselage correspond à une portion 27 de fuselage dont tous les panneaux 26, 28 sont assemblés au niveau de lignes 29 de jonction longitudinale formant une surface cylindrique ou de courbure plus complexe telle que par exemple à plusieurs lobes ou encore une forme dont la section est à contour évolutif dans la direction longitudinale comme celle de la pointe avant ou de la queue d'un aéronef (les panneaux n'étant alors pas de forme rectangulaire) ou autre. Les panneaux assemblés forment un tout continu sans décrochement de surfaces autant au niveau de leur surface intérieure (concave) que de leur surface extérieure (convexe). Pour former un tronçon de fuselage, les panneaux sont de forme courbe de manière qu'une fois plusieurs panneaux ainsi assemblés, ils forment entre eux un tronçon. Une virole 38, 40 à savoir une plaque 42, 44 recouvre partiellement chacun desdits deux panneaux 26, 28 sur leur surface intérieure (concave) au niveau des extrémités 30A, 30B, 32A, 32B non liées entre elles et au-delà : sa longueur est telle que la virole 38, 40 recouvre les bords 30, 32 des panneaux 26, 28 sur toute la longueur des extrémités 30A, 30B, 32A, 32B non liées et se prolonge au-delà pour permettre la mise en place d'au moins une fixation 46 de la plaque 42, 44 avec les panneaux 26, 28 dans la direction X au niveau des bords 30, 32 soudés ; dans la forme de réalisation illustrée, deux fixations 46 sont prévues de part et d'autre de la ligne de jonction longitudinale, à savoir 4 fixations 46 pour la plaque 40 au niveau uniquement des bords soudés. Au moins un rang de fixation 46 est prévu pour fixer la plaque 42, 44 au panneau 26 et au moins un rang de fixation en vis-à-vis de celle-ci par rapport à la ligne 29 de jonction longitudinale pour fixer la plaque 42, 44 au panneau 28. Selon la forme illustrée, les rangs de fixation sont parallèles entre eux et les fixations sont positionnées à équidistance mais tout autre positionnement est possible. Aucune fixation n'est prévue sur la zone la plus extrémale longitudinalement de la virole 38, 40 et la plus proche du tronçon adjacent 48. Le tronçon de fuselage est formé d'un ensemble de panneaux ainsi assemblés.

L'aéronef comprend un ensemble de tels tronçons positionnés en vis-à-vis aboutés de manière à être en prolongement les uns des autres. La virole 50 circonférentielle à savoir une plaque 56, est placée sur la surface intérieure du fuselage au niveau de chacune des lignes 52 de jonction circonférentielle de telle sorte qu'elle recouvre partiellement les panneaux contigus de deux tronçons adjacents. Selon une forme de réalisation illustrée sur la figure 6, la virole 50 circonférentielle enjambe les viroles longitudinales 38 en se superposant à elle. La virole 50 circonférentielle est assemblée aux panneaux 26, 28, 58 ainsi qu'aux viroles longitudinales à l'aide de fixations 60 de type connu telles que des rivets. La virole 50 peut être faite d'un seul tenant ou de plusieurs parties.

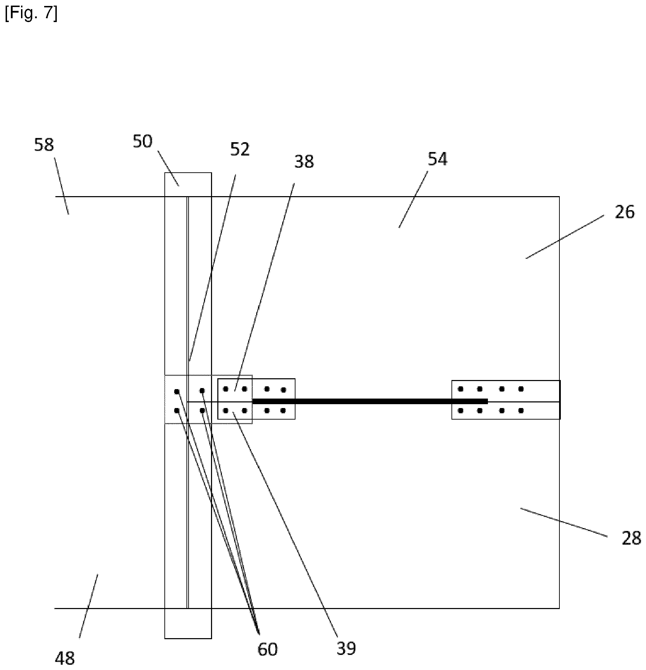

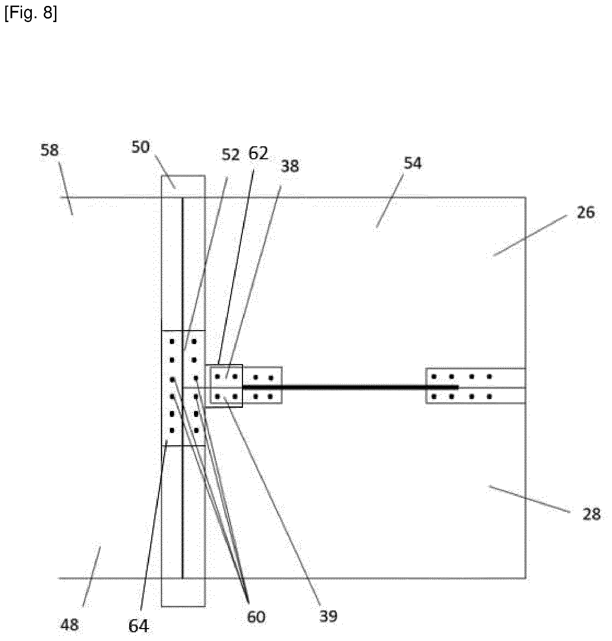

Selon une autre forme de réalisation illustrée sur les figures 7 et 8, la virole 50 circonférentielle et les viroles longitudinales 38 sont jointes par l'intermédiaire d'au moins une éclisse 39.

Dans la forme de réalisation de la figure 7, l'éclisse 39 est de forme rectangulaire. Elle est représentée avec une largeur plus importante mais elle pourrait être de même largeur que la virole 38. L'éclisse permet la jonction entre la virole longitudinale et la virole circonférentielle qui se jouxtent (à savoir qui sont contiguës) mais ne superposent pas. L'éclisse 39 peut présenter des formes différentes de celle rectangulaire illustrée.

Dans la forme de réalisation représentée sur la figure 8, l'éclisse 39 présente une forme en T présentant deux branches 62, 64 d'un seul tenant, la branche 62 dite longitudinale étant celle liée au centre de la branche 64 dite circonférentielle. La branche 64 circonférentielle présente la même largeur que celle de la virole 50 circonférentielle. La branche 62 longitudinale présente une largeur au moins égale à celle de la virole 38 longitudinale.

Que ce soit dans la forme de réalisation de la figure 7 ou celle de la figure 8, la virole 50 circonférentielle est assemblée aux panneaux 26, 28, 58 ainsi qu'à l'éclisse 39 intermédiaire à l'aide de fixations 60 de type connu telles que des rivets. Les fixations 60 sont disposées en au moins un rang circonférentiel de part et d'autre de la jonction 52, parallèle entre eux. De même la virole 38 longitudinale est assemblée aux panneaux 26, 28 ainsi qu'à l'éclisse 39 intermédiaire à l'aide de fixations 60 de type connu telles que des rivets. La virole 50 peut être faite d'un seul tenant ou de plusieurs parties. Les fixations 60 sont disposées en au moins un rang longitudinal de part et d'autre de la jonction 29 longitudinale, parallèle entre eux. Les fixations 60 sont réparties à équidistance mais toute autre disposition est envisageable.

## Revendications

1. Procédé d'assemblage de panneaux (26, 28, 58) de fuselage d'aéronef, des panneaux (26, 28) étant aboutés selon des lignes (29) de jonction longitudinales et fixés l'un à l'autre par leurs bords (30, 32) longitudinaux par soudage, **caractérisé en ce que** les extrémités longitudinales (30A, 30B, 32A, 32B) de leurs bords (30, 32) soudés ne sont pas liées entre elles et **en ce que** des viroles (38, 40) longitudinales sont fixées de manière à recouvrir partiellement la surface concave des panneaux (26, 28) au moins partiellement au niveau desdites extrémités (30A, 30B, 32A, 32B).

2. Procédé d'assemblage selon la revendication 1, **caractérisé en ce que** les panneaux (26, 28) sont soudés l'un à l'autre sur toute leur longueur L et **en ce que** les extrémités longitudinales (30A, 30B, 32A, 32B) des bords soudés sont dessoudées.

3. Procédé d'assemblage selon la revendication 1, **caractérisé en ce que** l'opération de soudage n'est réalisée que sur la partie des bords (30, 32) devant être liés et pas au niveau des extrémités (30A, 30B, 32A, 32B).

4. Procédé d'assemblage selon l'une des revendications 1 à 3, **caractérisé en ce que** les viroles longitudinales recouvrent au moins partiellement les extrémités non soudées des bords (30, 32) et une partie des bords soudés sur une longueur permettant de mettre en place au moins une fixation (46) pour fixer les viroles aux panneaux (26, 28).

5. Procédé d'assemblage selon l'une des revendications 1 à 4, caractérisé que ce que la longueur des extrémités non soudées est inférieure à la distance inter-cadre.

6. Procédé d'assemblage selon l'une des revendications 1 à 5, **caractérisé en ce que** les panneaux une fois assemblés (26, 28) forment un tronçon, et les tronçons sont assemblés deux à deux à l'aide d'une virole (50) circonférentielle qui enjambe les viroles (38, 40) longitudinales.

7. Procédé d'assemblage selon l'une des revendications 1 à 5, **caractérisé en ce que** les panneaux une fois assemblés (26, 28) forment un tronçon, et les tronçons sont assemblés deux à deux à l'aide d'une virole (50) circonférentielle qui jouxte les viroles (38, 40) longitudinales auxquelles elles sont liées par l'intermédiaire d'une éclisse (39).

8. Portion de fuselage comprenant au moins deux panneaux liés selon des lignes (29) de jonction longitudinale par leurs bords (30, 32) longitudinaux soudés entre eux, **caractérisé en ce que** les extrémités longitudinales (30A, 30B, 32A, 32B) de leurs bords (30, 32) soudés ne sont pas liées entre elles et **en ce que** des viroles (38, 40) longitudinales sont fixées de manière à recouvrir partiellement la surface concave des panneaux (26, 28) au moins partiellement au niveau desdites extrémités (30A, 30B, 32A, 32B).

9. Portion de fuselage selon la revendication 8, **caractérisé en ce que** les viroles (38, 40) longitudinales recouvrent au moins partiellement les extrémités non soudées des bords (30, 32) et une partie des bords soudés sur une longueur permettant de mettre en place au moins une fixation (46) pour fixer les viroles aux panneaux (26, 28).

10. Aéronef comprenant des portions de fuselage selon la revendication 9, **caractérisé en ce que** chaque portion (27) de fuselage forme un tronçon et **en ce que** les tronçons sont assemblés deux à deux à l'aide d'une virole (50) circonférentielle.

## Patentansprüche

1. Verfahren zum Verbinden von Platten (26, 28, 58) eines Luftfahrzeugrumpfes, wobei Platten (26, 28) entlang von Längsanschlusslinien (29) aneinandergefügt und an ihren Längsrändern (30, 32) durch Schweißen aneinander befestigt werden, **dadurch gekennzeichnet, dass** die Längsenden (30A, 30B, 32A, 32B) ihrer verschweißten Ränder (30, 32) nicht untereinander verbunden werden und dass Längsbeschläge (38, 40) so befestigt werden, dass sie die konkave Oberfläche der Platten (26, 28) mindestens teilweise an den Enden (30A, 30B, 32A, 32B) teilweise bedecken.

2. Verbindungsverfahren nach Anspruch 1, **dadurch gekennzeichnet, dass** die Platten (26, 28) über ihre gesamte Länge L miteinander verschweißt werden und dass die Verschweißungen an den Längsenden (30A, 30B, 32A, 32B) der verschweißten Ränder gelöst werden.

3. Verbindungsverfahren nach Anspruch 1, **dadurch gekennzeichnet, dass** der Schweißvorgang nur an dem Teil der Ränder (30, 32), die verbunden werden sollen, und nicht an den Enden (30A, 30B, 32A, 32B) durchgeführt wird.

4. Verbindungsverfahren nach einem der Ansprüche 1 bis 3, **dadurch gekennzeichnet, dass** die Längsbeschläge die nicht verschweißten Enden der Ränder (30, 32) und einen Teil der verschweißten Ränder über eine Länge, die es gestattet, mindestens eine Befestigung (46) zum Befestigen der Beschläge an den Platten (26, 28) einzurichten, mindestens teilweise bedecken.

5. Verbindungsverfahren nach einem der Ansprüche 1 bis 4, **dadurch gekennzeichnet, dass** die Länge der nicht verschweißten Enden kleiner als der Rahmenzwischenabstand ist.

6. Verbindungsverfahren nach einem der Ansprüche 1 bis 5, **dadurch gekennzeichnet, dass** die Platten (26, 28) nach dem Verbinden ein Teilstück bilden und die Teilstücke paarweise mit Hilfe eines Umfangsbeschlags (50) verbunden werden, der die Längsbeschläge (38, 40) überspannt.

7. Verbindungsverfahren nach einem der Ansprüche 1 bis 5, **dadurch gekennzeichnet, dass** die Platten (26, 28) nach dem Verbinden ein Teilstück bilden und die Teilstücke paarweise mit Hilfe eines Umfangsbeschlags (50) verbunden werden, der an die Längsbeschläge (38, 40) angrenzt, mit denen sie mit Hilfe einer Lasche (39) verbunden werden.

8. Rumpfteil, der mindestens zwei Platten beinhaltet, die entlang von Längsanschlusslinien (29) durch ihre untereinander verschweißten Längsränder (30, 32) verbunden sind, **dadurch gekennzeichnet, dass** die Längsenden (30A, 30B, 32A, 32B) ihrer verschweißten Ränder (30, 32) nicht untereinander verbunden sind und dass Längsbeschläge (38, 40) so befestigt sind, dass sie die konkave Oberfläche der Platten (26, 28) mindestens teilweise an den Enden (30A, 30B, 32A, 32B) teilweise bedecken.

9. Rumpfteil nach Anspruch 8, **dadurch gekennzeichnet, dass** die Längsbeschläge (38, 40) die nicht verschweißten Enden der Ränder (30, 32) und einen Teil der verschweißten Ränder über eine Länge, die es gestattet, mindestens eine Befestigung (46) zum Befestigen der Beschläge an den Platten (26, 28) einzurichten, mindestens teilweise bedecken.

10. Luftfahrzeug, das Rumpfteile nach Anspruch 9 beinhaltet, **dadurch gekennzeichnet, dass** jeder Rumpfteil (27) ein Teilstück bildet und dass die Teilstücke paarweise mit Hilfe eines Umfangsbeschlags (50) verbunden werden.

## Claims

1. Method for assembling aircraft fuselage panels (26, 28, 58), panels (26, 28) being butted together along longitudinal joining lines (29) and fixed to one another via their longitudinal edges (30, 32) by welding, **characterized in that** the longitudinal ends (30A, 30B, 32A, 32B) of their welded edges (30, 32) are not connected to one another and **in that** longitudinal hoops (38, 40) are fixed in such a way as to partially cover the concave surface of the panels (26, 28) at least partially at said ends (30A, 30B, 32A, 32B).

2. Method of assembly according to Claim 1, **characterized in that** the panels (26, 28) are welded to one another along their entire length L and **in that** the longitudinal ends (30A, 30B, 32A, 32B) of the welded edges are unwelded.

3. Method of assembly according to Claim 1, **characterized in that** the welding operation is performed over only part of the edges (30, 32) that are to be connected and not at the ends (30A, 30B, 32A, 32B).

4. Method of assembly according to one of Claims 1 to 3, **characterized in that** the longitudinal hoops at least partially cover the unwelded ends of the edges (30, 32) and part of the welded edges over a length that allows the fitting of at least one fixing (46) for fixing the hoops to the panels (26, 28).

5. Method of assembly according to one of Claims 1 to 4, **characterized in that** the length of the unwelded ends is less than the inter-frame distance.

6. Method of assembly according to one of Claims 1 to 5, **characterized in that**, once assembled, the panels (26, 28) form a section, and the sections are assembled in pairs using a circumferential hoop (50) which straddles the longitudinal hoops (38, 40).

7. Method of assembly according to one of Claims 1 to 5, **characterized in that**, once assembled, the panels (26, 28) form a section, and the sections are assembled in pairs using a circumferential hoop (50) which adjoins the longitudinal hoops (38, 40) to which they are connected using a fishplate (39).

8. Fuselage portion comprising at least two panels which are connected along longitudinal joining lines (29) by their longitudinal edges (30, 32) which are welded together, **characterized in that** the longitudinal ends (30A, 30B, 32A, 32B) of their welded edges (30, 32) are not connected to one another and **in that** longitudinal hoops (38, 40) are fixed in such a way as to partially cover the concave surface of the panels (26, 28) at least partially at said ends (30A, 30B, 32A, 32B).

9. Fuselage portion according to Claim 8, **characterized in that** the longitudinal hoops (38, 40) at least partially cover the unwelded ends of the edges (30, 32) and part of the welded edges over a length that allows the fitting of at least one fixing (46) for fixing the hoops to the panels (26, 28).

10. Aircraft comprising fuselage portions according to Claim 9, **characterized in that** each fuselage portion (27) forms a section and **in that** the sections are assembled in pairs using a circumferential hoop (50).
